# DEMANDE DE BREVET EUROPEEN

(11) **EP 4 495 053 A1**
(43) Date de publication de la demande: **22.01.2025**
(21) Numéro de dépôt: 24189294.2
(22) Date de dépôt: 17.07.2024
(51) Int. Cl.: B68B 5/06, A01K 13/00, B68C 5/00

(54) **BONNET POUR ÉQUIDÉ COMPATIBLE AVEC LES LICOLS ÉTHOLOGIQUES**

(30) Priorité: 21.07.2023 FR 2307854
(71) Demandeur: Billy, Véronique, 18000 Bourges (FR)
(72) Inventeur: Billy, Véronique, 18000 Bourges (FR)
(74) Mandataire: Tranvouez, Edern Morgan

(57) **Abrégé**

L'invention concerne un bonnet (100) pour équidé compatible avec licol éthologique comprenant : une calotte (101) destinée à recouvrir une partie supérieure de la tête de l'équidé ; un premier et un deuxième caches oreilles (102A, 102B) s'étendant à partir de la calotte (101) et un premier système d'attache (103A, 103B) s'étendant à partir de la calotte (101) et destiné à venir entourer une gorge de l'équidé lorsque le bonnet (100) l'équipe.

## Description

### Domaine technique

Le domaine de l'invention est l'équipement des équidés et notamment les bonnets à destination des équidés.

L'invention a ainsi pour objet un bonnet pour équidé compatible avec licol éthologique.

### État de l'art antérieur

Il est connu d'équiper les équidés, et notamment les chevaux, de bonnets 11 pour protéger leurs oreilles de l'entrée d'insectes, tels que des mouches.

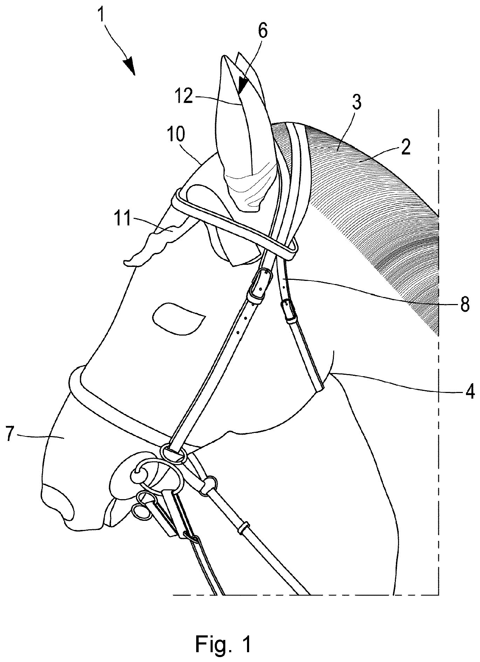

De tels bonnets 10 comportent, comme montré sur la figure 1, une calotte 11 recouvrant une partie supérieure de la tête 2 de l'équidé 1 incluant au moins en partie un front 5 et une nuque 3 de l'équidé 1 et présentant une première et une deuxième ouverture pour recevoir la première et la deuxième oreille 6 de l'équidé, et un premier et un deuxième caches oreilles 12 s'étendant à partir de la calotte 11 et destinés chacun à venir recouvrir une oreille respective de l'équidé 1.

De tels bonnets 10 permettent d'améliorer le confort de l'équidé pendant la période de prolifération des insectes (notamment l'été) et évitent la distraction de l'équidé qu'une telle pénétration pourrait provoquer.

Ces bonnets sont en revanche principalement adaptés pour être utilisés en association à des types d'harnachement de tête d'équidé particuliers, tels que par exemple les filets ou bridons, qui présente une têtière et un frontal venant appuyer le bonnet sur front 5 et la nuque 3 de l'équidé. Ainsi, lorsque l'équidé n'est pas équipé d'harnachement de tête, tel qu'au pré, il est nécessaire d'utiliser des équipements inesthétiques que sont les masques anti-insectes. De plus, il n'existe actuellement pas de solution compatible avec certains types d'harnachement tels que les licols éthologiques.

### Exposé de l'invention

L'invention vise à remédier à ces inconvénients et a ainsi pour but de fournir un bonnet pour équidé qui puisse équiper l'équidé quel que soit sont harnachement de tête ou en l'absence d'harnachement de tête ceci sans que l'esthétique de l'équidé soit dégradé comme c'est le cas avec les masques anti-insectes.

L'invention concerne à cet effet un bonnet pour équidé compatible avec licol éthologique comprenant :
- une calotte destinée à recouvrir une partie supérieure de la tête de l'équidé incluant une partie d'un front et une partie de nuque de l'équidé et présentant une première et une deuxième ouverture pour recevoir la première et la deuxième oreille,
- un premier et un deuxième caches oreilles s'étendant à partir de respectivement la première et la deuxième ouverture et destinés chacun à venir recouvrir une oreille respective de l'équidé afin d'empêcher la rentrée d'insecte dans cette dernière,
   le bonnet comprenant un premier système d'attache s'étendant à partir de la calotte et étant destiné à venir entourer une gorge de l'équidé lorsque le bonnet l'équipe pour permettre un maintien de la calotte sur la tête de l'équidé.

Avec un tel système d'attache, le bonnet peut être maintenu en place quel que soit le type d'harnachement de tête ou même en cas d'absence d'harnachement de tête. Ainsi le bonnet selon l'invention est en particulier parfaitement compatible avec les licols éthologiques. On notera de plus, que l'esthétique du bonnet peut rester intact, puisque le seul ajout nécessaire pour un tel maintien et le premier système d'attache qui peut être réalisé dans des couleurs assorties avec celles de la calotte et des caches oreilles.

On notera qu'un bonnet, au contraire des masques antimouches, laisse libre certaine partie de la tête du cheval dont notamment les yeux et sa mâchoire. De même, un bonnet est destiné à équiper l'équidé dessous le harnachement de tête et non par-dessus comme c'est le cas des masques antimouches, il n'est donc pas nécessaire de le retiré pour retirer ou équiper l'équidé avec le harnachement de tête.

Le premier système d'attache peut comprendre une premier et une deuxième extension latérale s'étendant à partir de la calotte de part et d'autre de la calotte et conformées pour se fixer l'une à l'autre au niveau de la gorge de l'équidé.

De tel portion latérale permet une attache aisée du bonnet au niveau de la gorge de l'équidé ceci avec une esthétique optimisée, puisque de telles extensions peuvent être agencées dans la continuité de la calotte.

Le premier système d'attache peut comprendre en outre au moins un élément de fermeture configuré pour fixer l'une à l'autre la première et la deuxième extension latérale, l'au moins un élément de fermeture étant préférentiellement choisi parmi les systèmes de fermeture autoagrippante, les boutons pression, les fermoirs à boucle ardillon, les boutonnières, les ensembles brides/boutons, les agrafes et les brandebourgs.

Un tel élément de fermeture permet une attache facilitée du premier système d'attache. Il est ainsi plus facile d'équiper de manière sécurisé l'équidé.

L'élément de fermeture peut être configuré pour fournir une longueur d'attache adaptable à la morphologie de l'équidé.

De cette manière un même bonnet peut équiper des équidés de différents gabarits.

La calotte peut comprendre une attache destinée à permettre l'attache d'un harnachement de tête d'équidé, tel qu'un licol préférentiellement du type éthologique, ladite attache étant avantageusement conformée pour permettre l'attache d'un dessus de tête dudit harnachement de tête d'équidé.

Ainsi, on limite les mouvements relatifs entre le harnachement de tête et le bonnet qui pourraient être désagréable pour l'équidé équipé.

La premier et la deuxième extension latérale peuvent réalisées dans un même matériau que celui de la calotte.

On assure ainsi une continuité esthétique entre la calotte et les premier et deuxième extensions latérales. De plus la fabrication du bonnet peut être facilitée, puisque la calotte et les premier et deuxième extensions latérales peuvent être fabriquées en une seule pièce et ne nécessite pas d'étape d'assemblage.

La premier et la deuxième extension latérale peuvent être réalisées dans un matériau comprenant un élastomère, ledit matériau étant préférentiellement identique à celui des caches oreilles.

De cette manière, les premier et deuxième extensions latérales peuvent présenter une certaine élasticité facilitant l'adaptation du bonnet à la morphologie de l'équidé.

La calotte peut être une pièce crochet comprenant préférentiellement du coton, les cache oreille comprenant préférentiellement un tissu incluant un élastomère.

Ces matériaux sont particulièrement adaptés pour le confort de l'équidé.

La calotte peut présenter une première portion destinée à recouvrir la nuque de l'équidé et une deuxième portion destinée à recouvrir le font de l'équidé et dans laquelle la deuxième portion recouvre au moins une partie du chanfrein,

la deuxième portion présentant un deuxième système d'attache destiné à coopérer avec une muserolle d'un harnachement de tête de l'équidé.

De cette manière, il est possible d'avoir une coopération entre le harnachement de tête de l'équidé et le bonnet assurant ainsi une bonne tenue du bonnet.

L'invention concerne en outre un procédé de fabrication d'un bonnet pour équidé comprenant les étapes suivantes :
- fourniture d'une calotte, la calotte étant destinée à recouvrir une partie supérieure de la tête de l'équidé incluant une partie d'un front et une partie de nuque de l'équidé et présentant une première et une deuxième ouverture pour recevoir la première et la deuxième oreille,
- fourniture d'un premier système d'attache, le premier système d'attache s'étendant à partir de la calotte et étant destiné à venir entourer une gorge de l'équidé lorsque le bonnet l'équipe pour permettre un maintien de la calotte sur la tête de l'équidé,
- fourniture d'un premier et un deuxième caches oreilles et agencement de ces premier et deuxième caches oreilles de telle manière qu'ils s'étendent à partir de respectivement la première et la deuxième ouverture, le premier et un deuxième caches oreilles destinés chacun à venir recouvrir une oreille respective de l'équidé afin d'empêcher la rentrée d'insecte dans cette dernière.

Un tel procédé permet la fabrication d'un bonnet selon l'invention et de bénéficier des avantages qui y sont liés.

### Brève description des dessins

La présente invention sera mieux comprise à la lecture de la description d'exemples de réalisation, donnés à titre purement indicatif et nullement limitatif, en faisant référence aux dessins annexés sur lesquels :
- la figure 1 illustre un cheval équipé d'un bonnet pour équidé selon l'art antérieur et d'un bridon ;
- la figure 2 illustre schématiquement un bonnet pour équidé selon l'invention ;
- la figure 3 illustre un cheval équipé d'un bonnet selon l'invention et d'un licol éthologique ;
- la figures 4A illustre l'installation d'une extension latérale d'un système d'attache selon l'invention, dans lequel cette extension latérale est réalisée dans le même tissus que celui des caches oreilles,
- la figure 4B illustre un bonnet tel qu'obtenu lors de l'installation d'extension latérale illustré sur la figure 4A.

Des parties identiques, similaires ou équivalentes des différentes figures portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

### Exposé détaillé de modes de réalisation particuliers

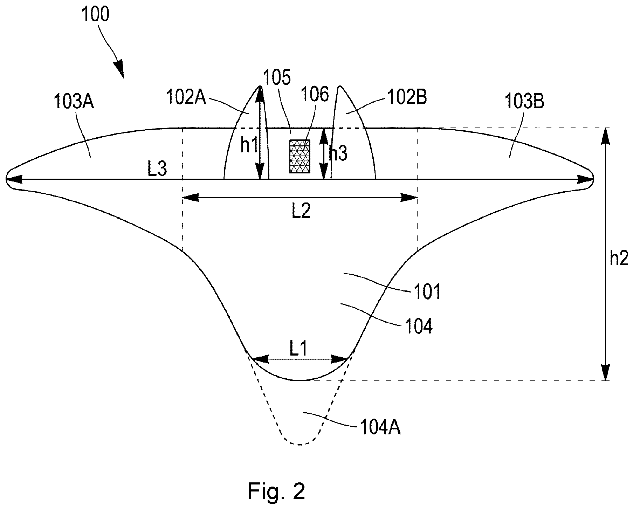

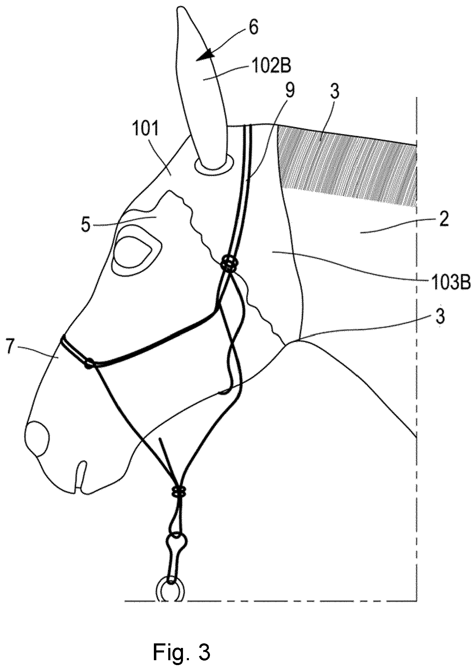

La figure 2 illustre un bonnet 100 pour équidé, ici un cheval 1 comme cela est montré sur la figure 3, selon l'invention.

Si dans le présent mode de réalisation, le bonnet 100 vise en particulier les chevaux 1, quels que soient leur type en incluant notamment les chevaux de selle, de trait et les poneys, le présent bonnet 100 concerne l'ensemble des équidés tels que les ânes, les mules, les mulets et les zèbres, et notamment les espèces d'équidé domestiques. De ce fait, le présent enseignement ne concerne pas que les chevaux et est applicable à l'ensemble des équidés.

Un bonnet 100 selon l'invention comprend :
- une calotte 101 destinée à recouvrir une partie supérieure de la tête 2 du cheval 1 incluant une partie d'un front 5 et une partie de nuque 3 du cheval 1 et présentant une première et une deuxième ouverture pour recevoir la première et la deuxième oreille 6,
- un premier et un deuxième caches oreilles 102A, 102B s'étendant à partir de respectivement la première et la deuxième ouverture et destinés chacun à venir recouvrir une oreille 6 respective du cheval 1 afin d'empêcher la rentrée d'insecte dans cette dernière,
- un premier système d'attache 103A, 103B s'étendant à partir de la calotte 101 et destiné à venir entourer une gorge 3 du cheval 1 lorsque le bonnet 100 l'équipe pour permettre un maintien de la calotte 101 sur la tête 2 du cheval 1.

La calotte 101 présente une forme générale triangulaire allongée avec une première portion 105 destinée à recouvrir la nuque 3 du cheval 1 et une deuxième portion 104 destinée à recouvrir le front 5 de l'équidé 1. Dans cette conformation triangulaire, l'un des côtés, le plus court, correspond à la première portion 105 et est arrondie, et les deux autres côtés, présentant un sommet tronqué, correspondent à la deuxième portion 104 de la calotte 101. Si la calotte 101 peut être réalisée dans un tissu quelconque, dans une application usuelle de l'invention, la calotte 101 peut être une pièce crochet comprenant préférentiellement du coton. En variante au coton, la pièce crochet peut être réalisée dans un autre matériau compatible avec le crochet, tel que le polyester. De même, il est envisageable, sans que l'on sorte du cadre de l'invention, que certaines parties de la calotte 101, notamment une partie ou la totalité de la deuxième portion 104, soit réalisée dans un tissu ou comprend une portion de la pièce crochet recouverte d'un tissu, tel qu'un velours.

Dans un exemple de conformation du bonnet 100 selon l'invention, la calotte présente une largeur L2 de 25 à 40 cm, préférentiellement 30 à 35 cm et être par exemple égale à 32 cm, au niveau de la première portion 105. Le sommet tronqué de la deuxième portion 104 peut présenter une largeur L1 comprise entre 5 et 15 cm, voire entre 7 et 13 cm et être, par exemple, égale à 10 cm. La hauteur h2 de calotte 101, c'est-à-dire la distance entre l'extrémité de la première portion 105 et celle de la deuxième portion 104 est comprise entre 30 et 45 cm, voire entre 32 et 40 cm et être, par exemple, égale à 35 cm. Les ouvertures de la calotte 101 destiné à permettre le passage des oreilles du cheval peuvent être positionnées à distance h3 de l'extrémité de la première portion 105. On notera bien entendu que ces dimensions, et notamment la hauteur h2, sont fournies pour un bonnet 100 pour cheval dans une configuration « version courte ». Ces dimensions peuvent donc différées lorsque le bonnet est dans une configuration « version longue » comme cela est décrit ci-après dans le cadre du deuxième mode de réalisation de l'invention.

La calotte 101 présente entre la première et la deuxième portion 105, 104 et à proximité des deux sommets associés au côté correspondant à la première portion 105 une première et une deuxième ouverture pour recevoir la première et la deuxième oreille 6 du cheval 1. Les premier et deuxième caches oreilles 102A, 102B s'étendent à partir de respectivement la première et la deuxième ouverture et sont conformés pour recevoir chacun une oreille 6 respective du cheval 1. Afin de facilité une telle conformation et assurer un bon confort du cheval 1, chacun du premier et deuxième caches oreilles 102A, 102B peut comprendre un tissu incluant un élastomère.

Chacun des cache oreille peut présenter une hauteur h1 comprise entre 12 et 25 cm, voire entre 15 et 20 cm et être, par exemple, égale à 17 cm.

Dans une conformation usuelle de l'invention, le premier système d'attache 103A, 103B comprend une première et une deuxième extension latérale 103A, 103B s'étendant à partir de la calotte 101 de part et d'autre de la calotte 101 et conformées pour se fixer l'une à l'autre au niveau de la gorge 3 du cheval 1. Plus précisément, la première et une deuxième extension latérale 103A, 103B s'entendent à partir des sommets correspondant du côté de la forme triangulaire de la calotte 101 associé à la première portion 105. Comme montré sur la figure 2, ces deux sommets peuvent être tronqués afin de permettre leur prolongation par la première et une deuxième extension latérale 103A, 103B.

La première et la deuxième extension latérale peuvent chacune présenter une forme triangulaire allongée, ladite forme s'étendant longitudinalement de la calotte 101 à partir de son côté le plus court selon une direction opposée à l'autre extension. De même, les côtés longs de la forme triangulaire s'étendent d'une manière avantageuse dans la continuité de la calotte 101. Chacune des extensions latérales peut s'étendre à partir de la calotte selon une longueur comprise entre 15 et 35 cm, préférentiellement entre 20 et 30 cm, voire entre 22 et 26 cm et être, par exemple, égale à 24 cm. Avec une telle configuration, la longueur totale L3 du bonnet 100, d'une extrémité de la première extension 103A à une extrémité de la deuxième extension 103 peut être comprise entre 55 et 110 cm, voire entre 74 cm et 87 cm et peut être, par exemple, égale à 80 cm.

Afin de permettre la fixation entre la première et la deuxième extension latérale 103A, 103B au niveau de la gorge 3 du cheval 1, le premier système d'attache 103A, 103B comprend en outre au moins un élément de fermeture, non montré, configuré pour fixer l'une à l'autre la première et la deuxième extension latérale 103A, 103B, l'au moins un élément de fermeture étant préférentiellement choisi parmi les systèmes de fermeture autoagrippante, les boutons pression, les fermoirs à boucle ardillon, les boutonnières, les ensembles brides/boutons, les agrafes et les brandebourgs. Cet élément de fermeture est préférentiellement adapté pour fournir une longueur d'attache adaptable à la morphologie de l'équidé (par exemple par l'aménagement d'une pluralité d'éléments de fermeture le long des première et deuxième extension).

Dans une première configuration de l'invention, afin d'assurer une continuité esthétique entre la calotte 101 et les extensions latérales 103A, 103B, les extensions latérales 103A, 103B peuvent être réalisées dans le même matériau que celui de la calotte 101. Ainsi, selon la possibilité où la calotte 101 comprend une pièce crochet, les extensions latérales 103A, 103B peuvent être comprises dans cette même pièce crochet.

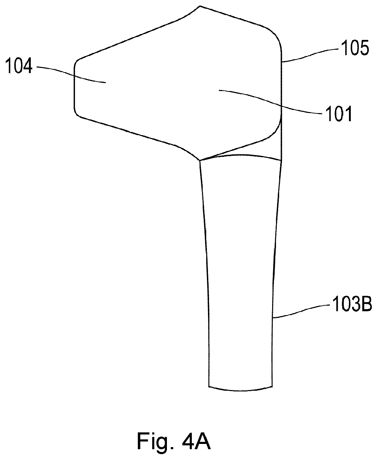

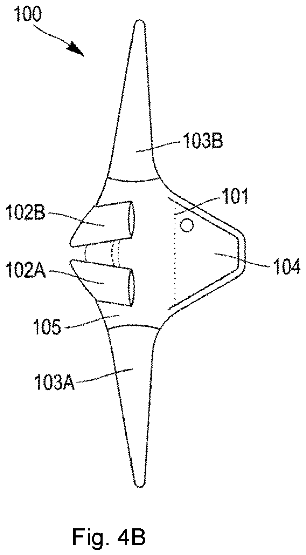

En variante, tel que cela est montré sur les figures 4A et 4B, afin de faciliter l'adaptation des extensions latérales 103A, 103B à la morphologie du cheval 1, les extensions latérales 103A, 103B peuvent être réalisées dans le même matériau que celui des caches oreilles 102A, 102B. Ainsi selon la possibilité dans laquelle chacun du premier et deuxième caches oreilles cache comprend un tissu incluant un élastomère, chacune des extensions latérales 103A, 103B peut comprendre un tissu incluant un élastomère.

Un bonnet selon l'invention peut être fabriqué selon un procédé comprenant les étapes suivantes :
- fourniture d'une calotte 101, la calotte 101 étant destinée à recouvrir une partie supérieure de la tête 2 du cheval 1 incluant une partie d'un front 5 et une partie de nuque 3 du cheval et présentant une première et une deuxième ouverture pour recevoir la première et la deuxième oreille 6,
- fourniture du premier système d'attache 103A, 103B, les première et deuxième extensions latérales 103A, 103B conformément au présent mode de réalisation, le premier système d'attache 103A, 103B s'étendant à partir de la calotte 101 et étant destiné à venir entourer une gorge 3 du cheval 1 lorsque le bonnet 100 l'équipe pour permettre un maintien de la calotte 101 sur la tête 2 du cheval 1,
- fourniture d'un premier et un deuxième caches oreilles 102A, 102B et agencement de ces premier et deuxième caches oreilles 102A, 102B de telle manière qu'ils s'étendent à partir de respectivement la première et la deuxième ouverture, le premier et un deuxième caches oreilles 102A, 102B destinés chacun à venir recouvrir une oreille 6 respective du cheval 1 afin d'empêcher la rentrée d'insecte dans cette dernière.

Bien entendu, l'ordre de ces étapes n'est qu'indicative et certaines de celles-ci peuvent être concomitantes sans que l'on sorte du cadre de l'invention. L'étape de fourniture du premier système d'attache 103A, 103B et fourniture d'un premier et un deuxième caches oreilles 102A, 102B pouvant par exemple aisément être inversées comme cela est montré sur la figure 4A dans lequel les extensions latérales 103A, 103B sont mise s en place alors que les caches oreilles ne sont pas encore fixés à la calotte 101. De même manière, lorsque la calotte 101 et les extensions latérales sont réalisées dans le même matériau, les étapes de fourniture de la calotte 101 et du premier système d'attache 103A, 103B peuvent être concomitantes, cette fourniture pouvant correspondre à la fourniture d'une pièce crochet comprenant à la fois la calotte 101 et les extensions latérales 103A, 103B.

Selon un deuxième mode de réalisation de l'invention, tel qu'illustré sur la figure 2, la deuxième portion 104 peut recouvrir au moins une partie du chanfrein 7 et ainsi présenter une deuxième portion plus étendue que celle du premier mode de réalisation. Un bonnet 100 selon ce deuxième mode de réalisation se différencie d'un bonnet 100 selon le premier mode de réalisation en ce que la deuxième portion 104 recouvre au moins en partie du chanfrein 7 du cheval 1 et en ce que la deuxième portion 104 présente un deuxième système d'attache, non illustré, destiné à coopérer avec le harnachement de tête 8, 9 équipant le cheval 1.

Ainsi, conformément à ce deuxième mode de réalisation, la deuxième portion 104 peut présenter une extrémité de portion 104A, montrée en pointillée afin de la distinguer de la configuration du premier mode de réalisation, qui s'étend au moins en partie au-dessus du chanfrein. Cette extrémité de portion 104A comprend le deuxième système d'attache. Ce deuxième système d'attache peut être fourni sous la forme d'une boucle dans laquelle est destiné à passer une muserolle du harnachement de tête 8, 9. En variante, cette extrémité de portion 104A peut être réalisée un tissu ou comprend une portion de la pièce crochet recouverte d'un tissu, tel qu'un velours.

On notera que si dans les présents modes de réalisation, le premier système d'attache 103A, 103B est fourni au moyen de deux extensions latérales 103A, 103B, celui-ci peut prendre une autre forme sans que l'on sorte du cadre de l'invention. Ainsi, en variante non illustrée, le premier système d'attache 103A, 103B peut par exemple comprendre deux lanières, par exemple en cuire, en lieu et place des extensions latérale 103A, 103B, ou encore ne présenter qu'une seule extension latérale (ou lanière) venant s'attacher sur une partie opposée de la calotte 101.

## Revendications

1. Bonnet (100) pour équidé (1) compatible avec licol éthologique (9) comprenant :
- une calotte (101) destinée à recouvrir une partie supérieure de la tête (2) de l'équidé (1) incluant une partie d'un front (5) et une partie de nuque (3) de l'équidé (1) et présentant une première et une deuxième ouverture pour recevoir la première et la deuxième oreille (6),
- un premier et un deuxième caches oreilles (102A, 102B) s'étendant à partir de respectivement la première et la deuxième ouverture et destinés chacun à venir recouvrir une oreille respective de l'équidé (1) afin d'empêcher la rentrée d'insecte dans cette dernière,
le bonnet (100) **étant caractéristique en ce qu**'il comprend un premier système d'attache (103A, 103B) s'étendant à partir de la calotte (101) et étant destiné à venir entourer une gorge (3) de l'équidé (1) lorsque le bonnet (100) l'équipe pour permettre un maintien de la calotte (101) sur la tête de l'équidé (1).

2. Bonnet (100) pour équidé selon la revendication 1, dans lequel le premier système d'attache (103A, 103B) comprend une premier et une deuxième extension latérale (103A, 103B) s'étendant à partir de la calotte (101) de part et d'autre de la calotte (101) et conformées pour se fixer l'une à l'autre au niveau de la gorge (3) de l'équidé (1).

3. Bonnet (100) pour équidé selon la revendication 1 ou 2, dans lequel le premier système d'attache (103A, 103B) comprend en outre au moins un élément de fermeture configuré pour fixer l'une à l'autre la première et la deuxième extension latérale (103A, 103B), l'au moins un élément de fermeture étant préférentiellement choisi parmi les systèmes de fermeture autoagrippante, les boutons pression, les fermoirs à boucle ardillon, les boutonnières, les ensembles brides/boutons, les agrafes et les brandebourgs.

4. Bonnet (100) pour équidé selon la revendication 3, dans lequel l'élément de fermeture est configuré pour fournir une longueur d'attache adaptable à la morphologie de l'équidé.

5. Bonnet (100) pour équidé selon l'une quelconque des revendications 1 à 4, dans lequel la calotte comprend une attache (106) destinée à permettre l'attache d'un harnachement de tête d'équidé (8, 9), tel qu'un licol (9) préférentiellement du type éthologique, ladite attache (106) étant avantageusement conformée pour permettre l'attache d'un dessus de tête (9A) dudit harnachement de tête d'équidé (8, 9).

6. Bonnet (100) pour équidé selon la revendication 2 prise seule ou en combinaison avec l'une quelconque des revendications 1 à 5, dans lequel la premier et la deuxième extension latérale (103A, 103B) sont réalisées dans un même matériau que celui de la calotte (101).

7. Bonnet (100) pour équidé selon la revendication 2 prise seule ou en combinaison avec l'une quelconque des revendications 1 à 5, dans lequel la premier et la deuxième extension latérale (103A, 103B) sont réalisées dans un matériau comprenant un élastomère, ledit matériau étant préférentiellement identique à celui des caches oreilles.

8. Bonnet (100) selon l'une quelconque des revendication 1 à 7, dans lequel la calotte (101) est une pièce crochet comprenant préférentiellement du coton, les cache oreille comprenant préférentiellement un tissu incluant un élastomère.

9. Bonnet (100) pour équidé selon l'une quelconque des revendication 1 à 8, dans lequel la calotte présente une première portion (105) destinée à recouvrir la nuque (3) de l'équidé (1) et une deuxième portion (104) destinée à recouvrir le font (5) de l'équidé (1) et dans laquelle la deuxième portion (104) recouvre au moins une partie d'un chanfrein (7), la deuxième portion (104) présentant un deuxième système d'attache destiné à coopérer avec une muserolle d'un harnachement de tête (8,9) de l'équidé (1).

10. Procédé de fabrication d'un bonnet pour équidé comprenant les étapes suivantes :
- fourniture d'une calotte (101), la calotte (101) étant destinée à recouvrir une partie supérieure de la tête (2) de l'équidé (1) incluant une partie d'un front (5) et une partie de nuque (3) de l'équidé (1) et présentant une première et une deuxième ouverture pour recevoir la première et la deuxième oreille (6),
- fourniture d'un premier système d'attache (103A, 103B), le premier système d'attache (103A, 103B) s'étendant à partir de la calotte (101) et étant destiné à venir entourer une gorge (3) de l'équidé (1) lorsque le bonnet (100) l'équipe pour permettre un maintien de la calotte (101) sur la tête de l'équidé (1),
- fourniture d'un premier et un deuxième caches oreilles (102A, 102B) et agencement de ces premier et deuxième caches oreilles (102A, 102B) de telle manière qu'ils s'étendent à partir de respectivement la première et la deuxième ouverture, le premier et un deuxième caches oreilles (102A, 102B) destinés chacun à venir recouvrir une oreille respective de l'équidé (1) afin d'empêcher la rentrée d'insecte dans cette dernière.
